# EUROPEAN PATENT APPLICATION

(11) **EP 4 604 656 A1**
(43) Date of publication of application: **20.08.2025**
(21) Application number: 22961646.1
(22) Date of filing: 10.10.2022
(51) Int. Cl.: H04W 74/08

(54) **RANDOM ACCESS METHOD AND APPARATUS, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); LIU, Xiaofei, Beijing 100085 (CN)
(74) Representative: Stöckeler, Ferdinand
(86) International application number: PCT/CN2022/124431
(87) International publication number: WO 2024/077451

(57) **Abstract**

Provided in the present disclosure are a random access method and apparatus, and a storage medium. The method comprises: in response to the fact that a physical random access channel (PRACH) has been sent to a base and a random access message, which is sent by the base station, has not been received, determining to perform PRACH retransmission; determining a target number times of repeat transmission for repeat sending of the PRACH when PRACH retransmission is performed; and performing PRACH retransmission on the basis of the target number of times of repeat transmission. According to the present disclosure, a terminal behavior of a terminal when initiating random access is clarified, such that the success rate of random access is improved, and the availability is high.

## Description

### FIELD

The present disclosure relates to the field of communications, and more particularly to a method and device for random access, and a storage medium.

### BACKGROUND

The retransmission mechanism for physical random access channel (PRACH) is discussed in Release 16 (R16) and Release 17 (R17), respectively. However, in Release 18, the existing retransmission mechanism of PRACH may no longer be applicable.

### SUMMARY

To overcome problems in the related art, embodiments of the present disclosure provide a method and a device for random access, and a storage medium.

According to a first aspect of embodiments of the present disclosure, there is provided a method for random access, which is performed by a terminal and includes:
in response to having sent a physical random access channel (PRACH) to a base station and not receiving a random access message sent by the base station, determining to perform a physical random access channel (PRACH) retransmission;
determining a target repetition number for repeat sending of the PRACH when performing the PRACH retransmission; and
performing the PRACH retransmission based on the target repetition number.

Optionally, determining the target repetition number for repeat sending of the PRACH when performing the PRACH retransmission includes:
determining the target repetition number based on an initial repetition number, wherein the initial repetition number is a repetition number for repeat sending of the PRACH determined when the terminal sends the PRACH to the base station for a first time.

Optionally, the method further includes:
obtaining a first measurement value by measuring a synchronization signal-reference signal receiving power (RSRP) before sending the PRACH to the base station for the first time;
determining a first RSRP threshold greater than the first measurement value and having a smallest difference from the first measurement value from one or more preset RSRP thresholds; and
based on preset repetition numbers corresponding to different RSRP thresholds, determining a preset repetition number corresponding to the first RSRP threshold as the initial repetition number.

Optionally, determining the target repetition number for repeat sending of the PRACH when performing the PRACH retransmission includes:
determining the target repetition number to be equal to the initial repetition number.

Optionally, determining the target repetition number based on the initial repetition number includes:
determining a first repetition number greater than the initial repetition number; and
determining the target repetition number to be equal to the first repetition number.

Optionally, determining the target repetition number based on the initial repetition number includes:
determining a second repetition number greater than the initial repetition number when not receiving a msg2 sent by the base station; and
determining the target repetition number to be equal to the second repetition number.

Optionally, the method further includes:
determining a sending power when performing the PRACH retransmission based on the target repetition number.

Optionally, determining the sending power when performing the PRACH retransmission based on the target repetition number includes:
in a case where the target repetition number is equal to the initial repetition number, determining to perform a power ramping when performing the PRACH retransmission; and
in a case where the target repetition number is greater than the initial repetition number, determining not to perform a power ramping when performing the PRACH retransmission.

Optionally, the method further includes:
determining a target resource used when performing the PRACH retransmission.

Optionally, determining the target resource used when performing the PRACH retransmission includes:
determining the target resource used when performing the PRACH retransmission to be a resource of a first resource group in a case where the target repetition number is equal to the initial repetition number, wherein the first resource group is a resource group of a plurality of resource groups pre-allocated to the terminal associated with the initial repetition number.

Optionally, the method further includes:
determining a second resource group associated with the target repetition number from a plurality of resource groups pre-allocated to the terminal in a case where the target repetition number is greater than the initial repetition number; and
determining the target resource used when performing the PRACH retransmission includes:
   determining the target resource used when performing the PRACH retransmission as a resource of the second resource group.

Optionally, the method further includes:
obtaining a second measurement value by measuring a synchronization signal-RSRP;
determining a second RSRP threshold greater than the second measurement value and having a smallest difference from the second measurement value from one or more preset RSRP thresholds; and
determining the target repetition number for repeat sending of the PRACH when performing the PRACH retransmission includes:
   based on preset repetition numbers corresponding to different RSRP thresholds, determining a preset repetition number corresponding to the second RSRP threshold as target repetition number.

Optionally, the method further includes:
determining a sending power when performing the PRACH retransmission based on the target repetition number.

Optionally, determining the sending power when performing the PRACH retransmission based on the target repetition number includes:
in a case where the RACH retransmission is performed based on the target repetition number, determining not to perform a power ramping when performing the PRACH retransmission; or
in response to determining that the target repetition number is different from a third repetition number of a previous repeat sending of the PRACH, determining not to perform a power ramping when performing the PRACH retransmission.

Optionally, the method further includes:
determining a target resource used when performing the PRACH retransmission.

Optionally, the method further includes:
determining a second resource group associated with the target repetition number from a plurality of resource groups pre-allocated to the terminal; and
determining the target resource used when performing the PRACH retransmission includes:
   determining the target resource used when performing the PRACH retransmission as a resource of the second resource group.

According to a second aspect of embodiments of the present disclosure, there is provided a device for random access, which is applied to a terminal and includes:
a first determining module configured to, in response to having sent a physical random access channel (PRACH) to a base station and not receiving a random access message sent by the base station, determine to perform a physical random access channel (PRACH) retransmission;
a second determining module configured to determine a target repetition number for repeat sending of the PRACH when performing the PRACH retransmission; and
a transmission module configured to perform the PRACH retransmission based on the target repetition number.

According to a third aspect of embodiments of the present disclosure, there is provided a computer-readable storage medium storing a computer program configured to perform the method for random access according to any one of above items.

According to a fourth aspect of embodiments of the present disclosure, there is provided a device for random access, which includes:
a processor; and
a memory configured to store instructions executable by the processor,
in which the processor is configured to perform the method for random access according to any one of above items.

The technical solutions provided by embodiments of the present disclosure may have the following beneficial effect.

In embodiments of the present disclosure, in a case where the terminal has sent the PRACH to the base station and does not receive the random access message sent by the base station, the terminal may determine to perform the PRACH retransmission, and the terminal may determine the target repetition number of the repeat sending of the PRACH when performing the PRACH retransmission, and perform the PRACH retransmission based on the target repetition number. According to the present disclosure, a terminal behavior of a terminal when initiating random access is clarified, such that the success rate of random access is improved, and the availability is high.

It should be understood that the forgoing general description and the detailed description hereinafter are only exemplary and explanatory, and cannot limit the present disclosure.

### BRIEF DESCRIPTION OF THE DRAWINGS

The accompanying drawings herein are incorporated into the specification and constitute a part of the specification. Theses accompanying drawings illustrate embodiments conform to the present disclosure and are used to explain the principles of the present disclosure together with the specification.
FIG. 1a is a flow chart of a method for random access according to an illustrative embodiment.
FIG. 1b is a flow chart of another method for random access according to an illustrative embodiment.
FIG. 2a is a flow chart of another method for random access according to an illustrative embodiment.
FIG. 2b is a flow chart of another method for random access according to an illustrative embodiment.
FIG. 3a is a flow chart of another method for random access according to an illustrative embodiment.
FIG. 3b is a flow chart of another method for random access according to an illustrative embodiment.
FIG. 4a is a flow chart of another method for random access according to an illustrative embodiment.
FIG. 4b is a flow chart of another method for random access according to an illustrative embodiment.
FIG. 5 is a flow chart of another method for random access according to an illustrative embodiment.
FIG. 6 is a flow chart of another method for random access according to an illustrative embodiment.
FIG. 7 is a flow chart of another method for random access according to an illustrative embodiment.
FIG. 8 is a block diagram of a device for random access according to an illustrative embodiment.
FIG. 9 is a schematic block diagram of a device for random access according to an illustrative embodiment.

### DETAILED DESCRIPTION OF THE DISCLOSURE

Exemplary embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with the present disclosure. On the contrary, they are merely examples of a device and a method consistent with some aspects of the present disclosure, as elaborated in the appended claims.

The terms used in the present disclosure are only for purpose of description of particular embodiments, and are not intended to limit the present disclosure. The singular form "a", "the" and "this" used in the present disclosure and the appended claims is also intended to include the plural form, unless other meanings are explicitly expressed in the context. It should be understood that the term "and/or" used herein refers to include any or all of the possible combinations of at least one listed related items.

It should be understood that, although the terms "first", "second", "third" may be employed by the present disclosure to describe various information, these information should not limited by these terms. These terms are only used to distinguish the information of the same type from each other. For example, a first information may be referred to as a second information without departing from the scope of the present disclosure, and similarly, the second information may also be referred to as the first information. Depending on the context, the word "if" used herein may be interpreted as "when...", "upon..." or "in response to determination".

A PRACH retransmission mechanism in R16 is as follows:
A base station may configure a maximum number of retransmissions for preamble retransmissions in a physical random access channel (PRACH) resource configuration of a system information block 1 (SIB1) or a radio resource control (RRC) message with the following values:
preambleTransMax ENUMERATED{n3, n4, n5, n6, n7, n8, n10, n20, n50 , n100, n200}

Further, the terminal, upon an unsuccessful reception of msg2 or msg4, performs a PRACH retransmission until the maximum number of retransmissions as described above is reached before declaring a RACH failure.

In addition, a fallback mechanism from 2-step RACH to 4-step RACH for R16 is specified in R16:

For R16 2-step RACH, once the terminal has chosen to initiate a 2-step RACH, it always uses a separate resource for PRACH transmission until the maximum number of retransmissions is reached;

If the base station is configured with msgA-TransMax, the 2-step RACH can fall back to the 4-step RACH after reaching the maximum number of retransmissions.

The msg3 repetition is introduced in R17, and the mechanism is as follows:

In R17, before the terminal initiates a RACH, it compares a measurement result of a synchronization signal -reference signal receiving power (SS-RSRP) with at least one threshold to determine whether to perform an msg3 repetition request. If the msg3 repetition request is determined to be initiated, for PRACH initial transmission and retransmission, a resource is always selected from among the separate PRACH resources for PRACH sending until the maximum number of retransmissions is reached.

As for R18, all of the above mechanisms may no longer be applicable, resulting in unclear terminal behavior when the terminal perform random access and a low success rate of random access.

In order to address the above technical problems, the present disclosure provides a method for random access as follows.

The method for random access provided by the present disclosure is described below from a terminal side.

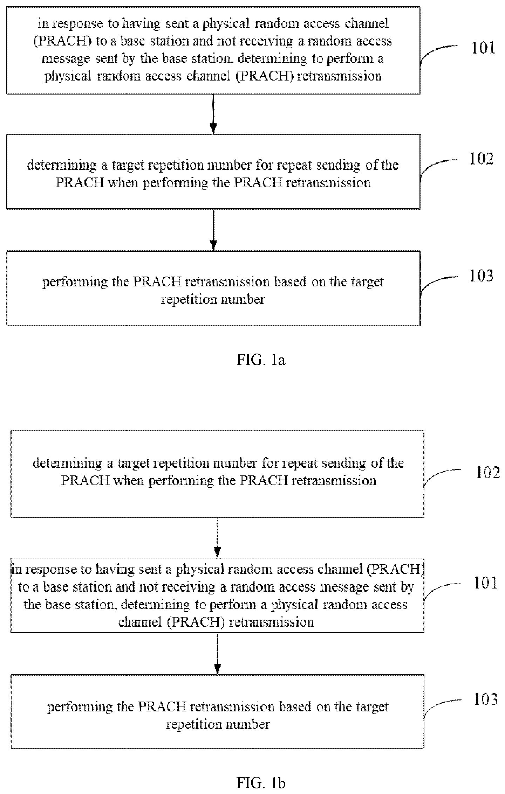

Embodiments of the present disclosure provide a method for random access, as illustrated with reference to FIGS. 1a and 1b, which are flowcharts of a method for random access illustrated according to an embodiment. The method may be performed by a terminal, and may include the following steps.

In step 101, in response to having sent a physical random access channel (PRACH) to a base station and not receiving a random access message sent by the base station, it is determined to perform a physical random access channel (PRACH) retransmission.

In embodiments of the present disclosure, not receiving a random access message sent by the base station may refer to not receiving msg2 or msg4 sent by the base station, or may refer to not receiving msgB sent by the base station.

In embodiments of the present disclosure, the PRACH retransmission means that the terminal does not need to wait until the entire random access procedure is over and determine that the random access procedure is failed before sending the PRACH, but rather the terminal may resend the PRACH to the base station as soon as it has sent the PRACH to the base station and does not receive msg2, msg4, or msgB correspondingly returned by the base station.

In step 102, a target repetition number for repeat sending of the PRACH when performing the PRACH retransmission is determined.

It should be noted that step 102 can be performed either before or during the PRACH. That is, either step 101 can be performed first, followed by step 102, as illustrated in FIG. 1a, or step 102 can be performed first, followed by step 101, as illustrated in FIG. 1b.

In embodiments of the present disclosure, the repeat sending of the PRACH is the PRACH repetition, which refers to the repeat sending of the same PRACH. The reliability of uplink transmission and the success rate of random access are improved by the repeat sending of the same PRACH.

It is understood that the preamble carried by the PRACH is the same when the PRACH repetition, i.e., the PRACH sent repeatedly is the same.

In step 103, the PRACH retransmission is performed based on the target repetition number.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In the above embodiments, a terminal behavior of the terminal when initiating random access is clarified, such that the success rate of random access is improved, and the availability is high.

In some optional embodiments, the terminal may determine the target repetition number using, but not limited to, any of the following manners.

Manner 1, a policy when performing the PARCH retransmission is determined based on a policy when initiating an initial PRACH, and the policy when performing the PARCH retransmission includes, but not limited to, the target repetition number.

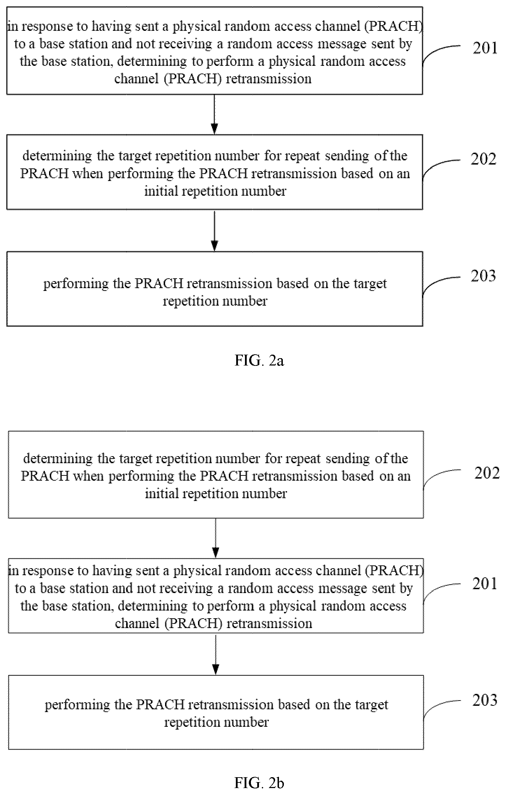

As illustrated with reference to FIGS. 2a and 2b, which are flowcharts of a method for random access illustrated according to an embodiment. The method may be performed by a terminal, and may include the following steps.

In step 201, in response to having sent a physical random access channel (PRACH) to a base station and not receiving a random access message sent by the base station, it is determined to perform a physical random access channel (PRACH) retransmission.

In embodiments of the present disclosure, not receiving a random access message sent by the base station may refer to not receiving msg2 or msg4 sent by the base station, or may refer to not receiving msgB sent by the base station.

In embodiments of the present disclosure, the PRACH retransmission means that the terminal does not need to wait until the entire random access procedure is over and determine that the random access procedure is failed before sending the PRACH, but rather the terminal may resend the PRACH to the base station as soon as it has sent the PRACH to the base station and does not receive msg2, msg4, or msgB correspondingly returned by the base station.

In step 202, a target repetition number for repeat sending of the PRACH when performing the PRACH retransmission is determined based on an initial repetition number.

It should be noted that step 202 can be performed either before or during the PRACH. That is, either step 201 can be performed first, followed by step 202, as illustrated in FIG. 2a, or step 202 can be performed first, followed by step 201, as illustrated in FIG. 2b.

In embodiments of the present disclosure, the initial repetition number may be a repetition number for repeat sending of the PRACH determined when the terminal sends the PRACH to the base station for the first time during the random access procedure.

In a possible implementation, the terminal determines the initial repetition number using the following manner.

First, the terminal obtains a first measurement value is obtained by measuring a synchronization signal-reference signal receiving power (SS-RSRP) before sending the PRACH to the base station for the first time.

Further, the terminal determines a first RSRP threshold greater than the first measurement value and having a smallest difference from the first measurement value from one or more preset RSRP thresholds.

For example, a plurality of preset thresholds includes a threshold #1, a threshold #2, and a threshold #3, and the threshold #2 and the threshold #3 are both greater than the first measurement value. A difference between the threshold #2 and the first measurement value is less than a difference between the threshold #3 and the first measurement value, and thus the terminal determines the threshold #2 as the first RSRP threshold.

Furthermore, based on preset repetition numbers corresponding to different RSRP thresholds, a preset repetition number corresponding to the first RSRP threshold is determined as the initial repetition number.

For example, the threshold #1 corresponds to a preset repetition number of 8, the threshold #2 corresponds to a preset repetition number of 4, the threshold #3 corresponds to a preset repetition number of 2, the first RSRP threshold is the threshold #2, and thus the terminal determines that the initial repetition number is 4.

In a possible implementation, the terminal may directly determine the initial repetition number as the target repetition number. For example, the initial repetition number is 4, and thus the target repetition number is also 4. In a possible implementation, the terminal may determine a first repetition number greater than the initial repetition number, and determine the first repetition number as the target repetition number.

Specifically, example manner of determining the target repetition number may include the following manners.

In a possible example, the first repetition number may be a positive integer greater than the initial repetition number.

For example, the initial repetition number is 4, the first repetition number is 6, and thus the terminal may determine that the target repetition number is 6.

In another possible example, the first repetition number may be a multiple of the initial repetition number.

For example, the first repetition number = the initial repetition number × alpha, where alpha is a positive integer greater than 1. For example, the initial repetition number is 4, alpha is 2, the first repetition number is 4×2=8, and thus the terminal may determine that the target repetition number is 8.

In embodiments of the present disclosure, alpha may be indicated by the base station, or alpha may be agreed upon by a protocol, which is not limited by the present disclosure.

In another possible implementation, the terminal determines a second repetition number greater than the initial repetition number when not receiving an msg2 sent by the base station; and the second repetition number may be equal to or unequal to the forgoing first repetition number, which is not limited by the present disclosure. Further, the terminal determines the second repetition number as the target repetition number. In a possible example, the second repetition number may be a positive integer greater than the initial repetition number. For example, the initial repetition number is 4, the second repetition number may be 6, and thus the terminal may determine that the target repetition number is 6.

In another possible example, the second repetition number may be a multiple of the initial repetition number. By way of example, the second repetition number = the initial repetition number × beta, where beta is a positive integer greater than 1. For example, the initial repetition number is 4, beta is 3, the second repetition number is 4×3=12, and thus the terminal may determine that the target repetition number is 12. In embodiments of the present disclosure, beta may be indicated by the base station, or beta may be agreed upon by a protocol, which is not limited by the present disclosure.

In still another possible implementation, the terminal may determine a third repetition number during the PRACH and use the third repetition number as the target repetition number. In the PRACH process, the terminal determines the third repetition number according to the synchronization signal-reference signal receiving power (SS-RSRP).

For example: the terminal may re-measure the SS-RSRP during the PRACH to obtain a second measurement value of the SS-RSRP, and compare the second measurement value with one or more preset RSRP thresholds to determine the first RSRP threshold greater than the first measurement value and having the smallest difference from the first measurement value; then, based on the preset repetition numbers corresponding to different RSRP thresholds, a preset repetition number corresponding to the first RSRP threshold is determined as the third repetition number. Alternatively, the terminal may determine the initial repetition number as the third repetition number.

For another example: if the terminal has a measurement window for SS-RSRP during the PRACH, the terminal may re-measure the SS-RSRP in the measurement window for SS-RSRP to obtain a second measurement value of the SS-RSRP, and compare the second measurement value with one or more preset RSRP thresholds to determine the first RSRP threshold greater than the first measurement value and having the smallest difference from the first measurement value; then, based on the preset repetition numbers corresponding to different RSRP thresholds, a preset repetition number corresponding to the first RSRP threshold is determined as the third repetition number. If the terminal does not have a measurement window for SS-RSRP during the PRACH, the third repetition number is determined based on the initial repetition number. Of course, this case is only an example and is not the only way to determine the third repetition number.

In step 203, the PRACH retransmission is performed based on the target repetition number.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In the above embodiments, the terminal may determine a target repetition number for repeat sending of the PRACH when performing the PRACH retransmission based on an initial repetition number when initiating an initial PRACH; and perform the PRACH retransmission based on the target repetition number. A terminal behavior of a terminal when initiating random access is clarified, such that the success rate of random access is improved, and the availability is high.

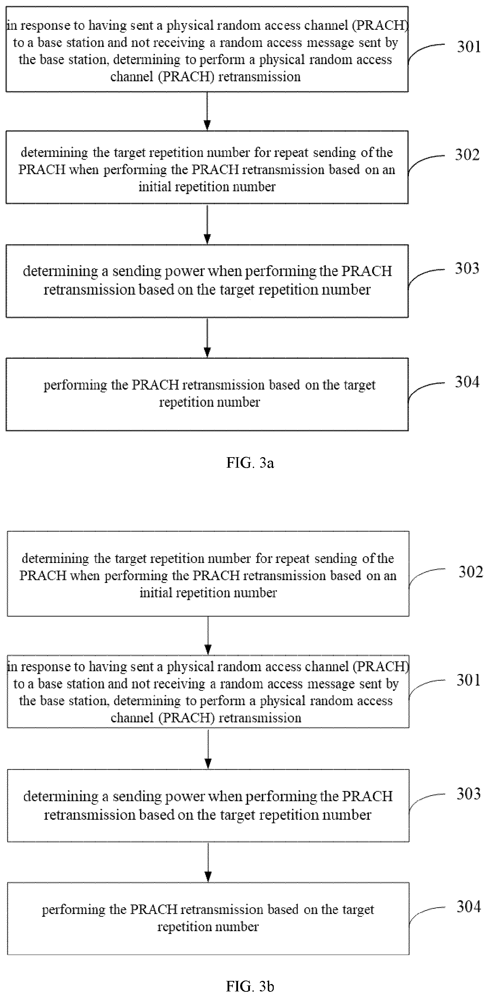

In some optional embodiments, as illustrated with reference to FIGS. 3a and 3b, which are flowcharts of a method for random access illustrated according to an embodiment. The method may be performed by a terminal, and may include the following steps.

In step 301, in response to having sent a physical random access channel (PRACH) to a base station and not receiving a random access message sent by the base station, it is determined to perform a physical random access channel (PRACH) retransmission.

Step 301 is implemented in a similar manner as step 201 and will not be repeated herein.

In step 302, a target repetition number for repeat sending of the PRACH when performing the PRACH retransmission is determined based on an initial repetition number.

Step 302 is implemented in a similar manner as step 202 and will not be repeated herein.

Similar to the forgoing embodiments, step 302 can be performed either before or during the PRACH. That is, either step 301 can be performed first, followed by step 302, as illustrated in FIG. 3a, or step 302 can be performed first, followed by step 301, as illustrated in FIG. 3b.

In step 303, a sending power when performing the PRACH retransmission is determined based on the target repetition number.

In embodiments of the present disclosure, it may be determined whether the power ramping is performed when performing the PRACH based on the target repetition number.

In a possible implementation, the target repetition number is equal to the initial repetition number, and accordingly, considering that the terminal uses the initial repetition number when sending the PRACH to the base station for the first time and does not receive the random access message sent by the base station, in order to increase the success rate of the random access, the terminal may, based on a related manner, determine to perform the power ramping when performing the PRACH retransmission.

In another possible implementation, the target repetition number is different from the initial repetition number, and in the present disclosure, the target repetition number is greater than the initial repetition number, and accordingly, the terminal may determine not to perform the power ramping when performing the PRACH retransmission. That is, the success rate of the random access is improved by increasing the number of repetitions. Of course, it is also possible to perform the power ramping in a case where the target repetition number is greater than the initial repetition number.

In step 304, the PRACH retransmission is performed based on the target repetition number.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In embodiments of the present disclosure, the terminal may increase the sending power for sending the PRACH when it determines to perform the power ramping, and perform the PRACH retransmission based on the increased sending power.

Alternatively, the terminal may perform the PRACH retransmission based on the sending power for the previous sending of the PRACH when it determines not to perform the power ramping.

In the above embodiments, the terminal may determine whether to perform the power ramping according to the target repetition number when performing the PRACH retransmission, and a terminal behavior of the terminal when initiating random access is clarified, such that the success rate of random access is improved, and the availability is high.

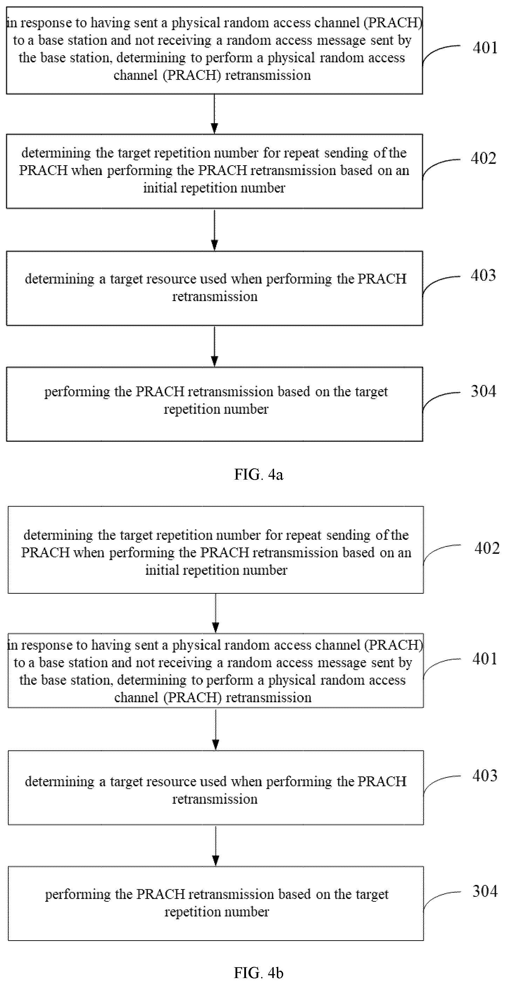

In some optional embodiments, as illustrated with reference to FIGS. 4a and 4b, which are flowcharts of a method for random access illustrated according to an embodiment. The method may be performed by a terminal, and may include the following steps.

In step 401, in response to having sent a physical random access channel (PRACH) to a base station and not receiving a random access message sent by the base station, it is determined to perform a physical random access channel (PRACH) retransmission.

Step 401 is implemented in a similar manner as step 201 and will not be repeated herein.

In step 402, a target repetition number for repeat sending of the PRACH when performing the PRACH retransmission is determined based on an initial repetition number.

Step 402 is implemented in a similar manner as step 202 and will not be repeated herein.

Similar to the forgoing embodiments, step 402 can be performed either before or during the PRACH. That is, either step 401 can be performed first, followed by step 402, as illustrated in FIG. 4a, or step 402 can be performed first, followed by step 401, as illustrated in FIG. 4b.

In step 403, a target resource used when performing the PRACH retransmission is determined.

In a possible implementation, the target resource used when performing the PRACH retransmission may be determined as a resource of a first resource group in a case where the target repetition number is equal to the initial repetition number. The first resource group is a resource group of a plurality of resource groups pre-allocated to the terminal associated with the initial repetition number. That is, when the terminal performs the PRACH retransmission it selects a resource from the same resource group as when it initially sends the PRACH.

For example, repetition number n1 is associated with resource group #1, repetition number n2 is associated with resource group #2, the repetition number n3 is associated with resource group #3, and the initial repetition number is n2, thus the first resource group is resource group #2, and the terminal determines that the target resource used when performing the PRACH retransmission is a resource of resource group #2.

In another possible implementation, the target resource used when performing the PRACH retransmission may be determined to be a resource of a dedicated resource pool in a case where the target repetition number is equal to the initial repetition number. Specifically, the dedicated resource pool may be a resource pool configured on a base station side and dedicated to perform the PRACH retransmission. That is, the terminal may use a resource in the dedicated resource pool to perform the PRACH retransmission.

In another possible implementation, the target repetition number is different from the initial repetition number. Specifically, the target repetition number is greater than the initial repetition number, and the terminal may determine the target resource used when performing the PRACH retransmission to be a resource of a first resource group. The first resource group is a resource group of a plurality of resource groups pre-allocated to the terminal associated with the initial repetition number.

In another possible implementation, the target repetition number is different from the initial repetition number. Specifically, the target repetition number is greater than the initial repetition number, the target resource used when performing the PRACH retransmission may be determined to be a resource of a dedicated resource pool. Specifically, the dedicated resource pool may be a resource pool configured on a base station side and dedicated to perform the PRACH retransmission. That is, the terminal may use a resource in the dedicated resource pool to perform the PRACH retransmission.

In another possible implementation, the target repetition number is different from the initial repetition number. Specifically, the target repetition number is greater than the initial repetition number, and the terminal may determine a second resource group associated with the target repetition number from the plurality of resource groups pre-allocated to the terminal and further determine the target resource used when performing the PRACH retransmission to be a resource of the second resource group.

For example, repetition number n1 is associated with resource group #1, repetition number n2 is associated with resource group #2, the repetition number n3 is associated with resource group #3, the initial repetition number is n2, the target repetition number is n3, and n3 is greater than n2, thus the second resource group is resource group #3, and the terminal determines that the target resource used when performing the PRACH retransmission is a resource of resource group #3.

The above is an example illustration only. In practice, other manners of determining the target resource used when performing the PRACH retransmission should fall within the scope of protection of the present disclosure.

In step 404, the PRACH retransmission is performed based on the target repetition number and using the target resource.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In embodiments of the present disclosure, the terminal may use the target resource determined in step 403 to perform the PRACH retransmission.

In the above embodiments, the terminal may determine the target resource used when performing the PRACH retransmission according to the target repetition number when performing the PRACH retransmission, and a terminal behavior of the terminal when initiating random access is clarified, such that the success rate of random access is improved, and the availability is high.

Manner 2, the target repetition number is collectively determined based on a second measurement value of the synchronization signal-RSRP and at least one preset threshold when performing the PRACH retransmission.

In an implementation, the method may further include:
determining a sending power when performing the PRACH retransmission based on the target repetition number.

The step is implemented in a similar manner as step 303 and will not be repeated herein.

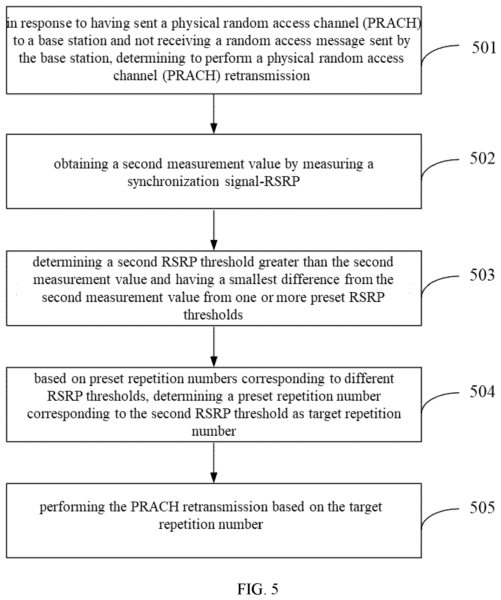

As illustrated with reference to FIG. 5, which is a flowchart of a method for random access illustrated according to an embodiment. The method may be performed by a terminal, and may include the following steps.

In step 501, in response to having sent a physical random access channel (PRACH) to a base station and not receiving a random access message sent by the base station, it is determined to perform a physical random access channel (PRACH) retransmission.

In embodiments of the present disclosure, not receiving a random access message sent by the base station may refer to not receiving msg2 or msg4 sent by the base station, or may refer to not receiving msgB sent by the base station.

In embodiments of the present disclosure, the PRACH retransmission means that the terminal does not need to wait until the entire random access procedure is over and determine that the random access procedure is failed before sending the PRACH, but rather the terminal may resend the PRACH to the base station as soon as it has sent the PRACH to the base station and does not receive msg2, msg4, or msgB correspondingly returned by the base station.

In step 502, a second measurement value is obtained by measuring a synchronization signal-RSRP.

In embodiments of the present disclosure, the terminal, when determining to perform the PRACH retransmission, may obtain the second measurement based on the synchronization signal-RSRP measured in real time.

In step 503, a second RSRP threshold greater than the second measurement value and having a smallest difference from the second measurement value is determined from one or more preset RSRP thresholds.

For example, a plurality of preset thresholds includes a threshold #1, a threshold #2, and a threshold #3, and the threshold #2 and the threshold #3 are both greater than the second measurement value. A difference between the threshold #1 and the second measurement value is less than a difference between the threshold #2 and the first measurement value and a difference between the threshold #3 and the first measurement value, and thus the terminal determines the threshold #1 as the first RSRP threshold.

In step 504, based on preset repetition numbers corresponding to different RSRP thresholds, a preset repetition number corresponding to the second RSRP threshold is determined as target repetition number.

For example, the threshold #1 corresponds to a preset repetition number of 8, the threshold #2 corresponds to a preset repetition number of 4, the threshold #3 corresponds to a preset repetition number of 2, the second RSRP threshold is the threshold #1, and thus the terminal determines that the target repetition number is 8.

In step 505, the PRACH retransmission is performed based on the target repetition number.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In the above embodiments, the terminal may determine a target repetition number for repeat sending of the PRACH when performing the PRACH retransmission based on the synchronization signal-RSRP measured in real time when determining to perform the PRACH retransmission; and perform the PRACH retransmission based on the target repetition number. A terminal behavior of a terminal when initiating random access is clarified, such that the success rate of random access is improved, and the availability is high.

For example: if the terminal has a measurement window for SS-RSRP during the PRACH, the terminal may re-measure the SS-RSRP in the measurement window for SS-RSRP to obtain a second measurement value of the SS-RSRP, and compare the second measurement value with one or more preset RSRP thresholds to determine the first RSRP threshold greater than the first measurement value and having the smallest difference from the first measurement value; then, based on the preset repetition numbers corresponding to different RSRP thresholds, a preset repetition number corresponding to the first RSRP threshold is determined as the third repetition number. If the terminal does not have a measurement window for SS-RSRP during the PRACH, the third repetition number is determined based on the initial repetition number. Of course, this case is only an example and is not the only way to determine the third repetition number.

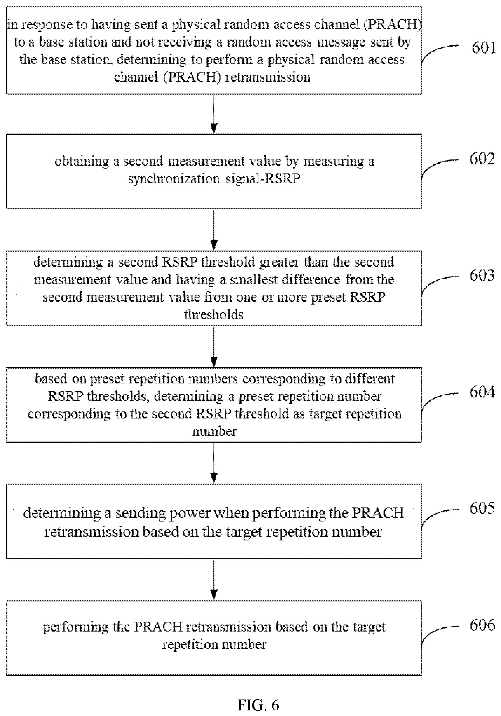

In some optional embodiments, as illustrated with reference to FIG. 6, which is a flowchart of a method for random access illustrated according to an embodiment. The method may be performed by a terminal, and may include the following steps.

In step 601, in response to having sent a physical random access channel (PRACH) to a base station and not receiving a random access message sent by the base station, it is determined to perform a physical random access channel (PRACH) retransmission.

Step 601 is implemented in a similar manner as step 501 and will not be repeated herein.

In step 602, a second measurement value is obtained by measuring a synchronization signal-RSRP.

Step 602 is implemented in a similar manner as step 502 and will not be repeated herein.

In step 603, a second RSRP threshold greater than the second measurement value and having a smallest difference from the second measurement value is determined from one or more preset RSRP thresholds.

Step 603 is implemented in a similar manner as step 503 and will not be repeated herein.

In step 604, based on preset repetition numbers corresponding to different RSRP thresholds, a preset repetition number corresponding to the second RSRP threshold is determined as target repetition number.

Step 604 is implemented in a similar manner as step 504 and will not be repeated herein.

In step 605, a sending power when performing the PRACH retransmission is determined based on the target repetition number.

In a possible implementation, in a case where the RACH retransmission is performed based on the target repetition number, the terminal may determine not to perform a power ramping.

In another possible implementation, in response to determining that the target repetition number is different from a third repetition number of a previous repeat sending of the PRACH, i.e., the repetition number is changed, the terminal may determine not to perform the power ramping.

In another possible implementation, in response to determining that the target repetition number is different from a third repetition number of a previous repeat sending of the PRACH, i.e., the repetition number is changed, the terminal may determine not to perform the power ramping.

In step 606, the PRACH retransmission is performed based on the target repetition number.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In embodiments of the present disclosure, the terminal may increase the sending power for sending the PRACH when it determines to perform the power ramping, and perform the PRACH retransmission based on the increased sending power.

Alternatively, the terminal may perform the PRACH retransmission based on the sending power for the previous sending of the PRACH when it determines not to perform the power ramping.

In an implementation, the method may further include:
determining a sending power when performing the PRACH retransmission based on the target repetition number.

The step is implemented in a similar manner as step 303 and will not be repeated herein.

In the above embodiments, the terminal may determine whether to perform the power ramping according to the target repetition number when performing the PRACH retransmission, and a terminal behavior of the terminal when initiating random access is clarified, such that the success rate of random access is improved, and the availability is high.

In an implementation, the method may further include:
determining a target resource used when performing the PRACH retransmission.

The step is implemented in a similar manner as step 705 and will not be repeated herein.

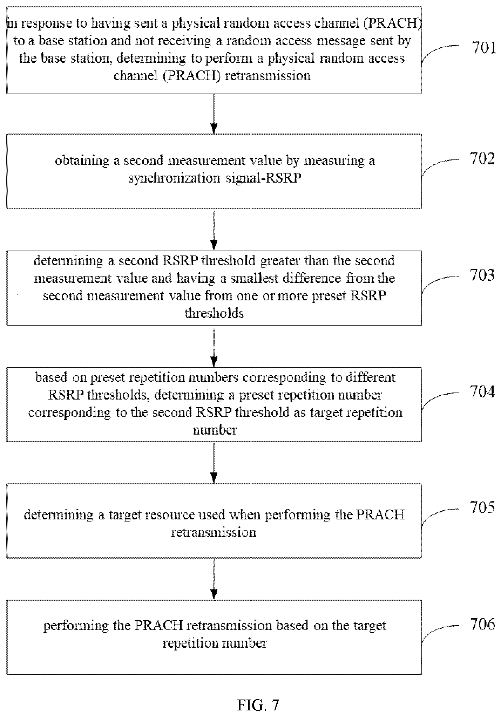

In some optional embodiments, as illustrated with reference to FIG. 7, which is a flowchart of a method for random access illustrated according to an embodiment. The method may be performed by a terminal, and may include the following steps.

In step 701, in response to having sent a physical random access channel (PRACH) to a base station and not receiving a random access message sent by the base station, it is determined to perform a physical random access channel (PRACH) retransmission.

Step 701 is implemented in a similar manner as step 501 and will not be repeated herein.

In step 702, a second measurement value is obtained by measuring a synchronization signal-RSRP.

Step 702 is implemented in a similar manner as step 502 and will not be repeated herein.

In step 703, a second RSRP threshold greater than the second measurement value and having a smallest difference from the second measurement value is determined from one or more preset RSRP thresholds.

Step 703 is implemented in a similar manner as step 503 and will not be repeated herein.

In step 704, based on preset repetition numbers corresponding to different RSRP thresholds, a preset repetition number corresponding to the second RSRP threshold is determined as target repetition number.

Step 704 is implemented in a similar manner as step 504 and will not be repeated herein.

In step 705, a target resource used when performing the PRACH retransmission is determined.

In a possible implementation, the terminal may determine a second resource group associated with the target repetition number from the plurality of resource groups pre-allocated to the terminal and further determine the target resource used when performing the PRACH retransmission to be a resource of the second resource group.

In another possible implementation, the terminal may determine the target resource used when performing the PRACH retransmission to be a resource of a dedicated resource pool. Specifically, the dedicated resource pool may be a resource pool configured on a base station side and dedicated to perform the PRACH retransmission. That is, the terminal may use a resource in the dedicated resource pool to perform the PRACH retransmission.

The above is an example illustration only. In practice, other manners of determining the target resource used when performing the PRACH retransmission should fall within the scope of protection of the present disclosure.

In step 706, the PRACH retransmission is performed based on the target repetition number and using the target resource.

In embodiments of the present disclosure, the target repetition number may be a non-zero positive integer, e.g., 1, 2.......

If the target repetition number is 1, the terminal no longer performs the PRACH repetition when initiating the PRACH retransmission.

If the target repetition number is greater than 1, the terminal performs the PRACH repetition when initiating the PRACH retransmission, and the number of repetitions is equal to the target repetition number.

In embodiments of the present disclosure, the terminal may use the target resource determined in step 705 to perform the PRACH retransmission.

In an implementation, the method may further include:
determining a sending power when performing the PRACH retransmission based on the target repetition number.

The step is implemented in a similar manner as step 303 and will not be repeated herein.

In the above embodiments, the terminal may determine the target resource used when performing the PRACH retransmission according to the target repetition number when performing the PRACH retransmission, and a terminal behavior of the terminal when initiating random access is clarified, such that the success rate of random access is improved, and the availability is high.

For ease of understanding, the following are further examples of the above solutions as follows.

In embodiment 1, the terminal needs to determine whether to perform the PRACH repetition and/or to determine the PRACH repetition number by comparing a measurement result of the SS-RSRP, i.e., the first measurement value, with the one or more preset RSRP thresholds only when the terminal sends the PRACH to the base station for the first time.

The terminal determines a target repetition number for repeat sending of the PRACH when performing the PRACH retransmission based on a repetition number of an initial transmission, in a case of determining to perform the PRACH retransmission. The initial repetition number is a repetition number for repeat sending of the PRACH determined when the terminal sends the PRACH to the base station for the first time.

An implementation is that the target repetition number is kept equal to the repetition number of the initial transmission.

Optionally, in the present embodiment, the terminal performs the power ramping based on a related manner when performing the PRACH retransmission.

Optionally, when performing the PRACH retransmission, a resource in the first resource pool may be chosen to perform the PRACH retransmission. The first resource group is a resource group of a plurality of resource groups pre-allocated to the terminal associated with the initial repetition number.

Another implementation is that the target repetition number is greater than the initial repetition number.

For example, the target repetition number = the initial repetition number × alpha, where alpha>1.

Optionally, in the present solution, the terminal no longer performs the power ramping when performing the PRACH retransmission.

Optionally, in the present solution, the terminal determines an associated second resource group based on the target repetition number and performs the PRACH retransmission using the resource in the second resource group.

In embodiment 2, the target repetition number for repeat sending of the PRACH when the terminal performs the PRACH retransmission and whether or not to perform the PRACH retransmission are also determined by judging the RSRP threshold.

Specifically, the terminal may obtain a second measurement value by measuring the synchronization signal-RSRP, and determine the second RSRP threshold greater than the second measurement value and having the smallest difference from the second measurement value from the one or more preset RSRP thresholds; based on the preset repetition numbers corresponding to different RSRP thresholds, a preset repetition number corresponding to the second RSRP threshold is determined as the target repetition number.

Optionally, in the present solution, the terminal no longer performs the power ramping when performing the PRACH retransmission.

Optionally, in the present solution, when the terminal determines that the target repetition number is different from a third repetition number of a previous repeat sending of the PRACH, the terminal determines not to perform a power ramping when performing the PRACH retransmission. Optionally, in the present solution, the terminal determines an associated second resource group based on the target repetition number and performs the PRACH retransmission using the resource in the second resource group.

The above is only an illustrative description, and a person skilled in the art can understand that other solutions for determining whether to perform the PRACH retransmission, determining the target repetition number for repeat sending of the PRACH when performing the PRACH retransmission, and determining the sending power, the target resource used, and so on, when performing the PRACH retransmission, shall fall within the scope of protection of the present disclosure.

Corresponding to the foregoing embodiments of application function implementation methods, the present disclosure also provides embodiments of application function implementation devices.

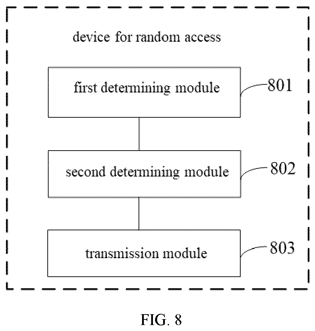

FIG. 8 is a block diagram of a device for random access according to an illustrative embodiment. The device is applied to a terminal and includes:
a first determining module 108 configured to, in response to having sent a physical random access channel (PRACH) to a base station and not receiving a random access message sent by the base station, determine to perform a physical random access channel (PRACH) retransmission;
a second determining module 802 configured to determine a target repetition number for repeat sending of the PRACH when performing the PRACH retransmission; and
a transmission module 803 configured to perform the PRACH retransmission based on the target repetition number.

For the device embodiments, since it basically corresponds to the method embodiments, it is sufficient to refer to a portion of the description of the method embodiments where relevant. The device embodiments described above are merely illustrative, the units described as separate components may or may not be physically separated, and the components displayed as units may or may not be physical units, that is, they may be located in one place, or it can be distributed to multiple network units. Some or all of the modules can be selected according to actual needs to achieve the purpose of the solution of the embodiments, which can be understood and implemented by those of ordinary skill in the art without creative work it can be understood and implemented by a person of ordinary skill in the art without creative labor.

Accordingly, the present disclosure further provides a computer-readable storage medium storing a computer program configured to perform the method for random access according to any one of above items.

Accordingly, the present disclosure further provides a device for random access, which includes:
a processor; and
a memory configured to store instructions executable by the processor,
in which the processor is configured to perform the method for random access according to any one of above items.

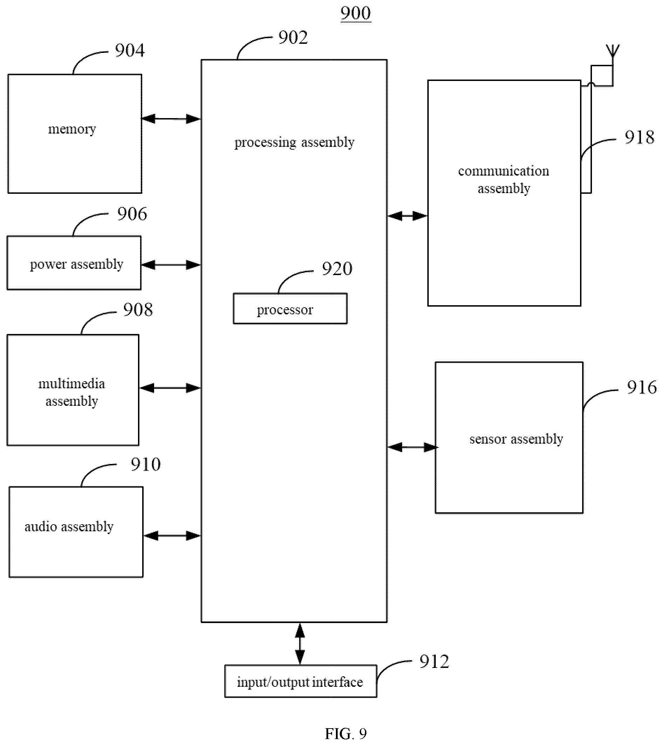

FIG. 9 is a block diagram of a device 900 for random access according to an illustrative embodiment. For example, the device 900 may be a terminal such as a cell phone, a tablet computer, an e-book reader, a multimedia playback device, a wearable device, an in-vehicle user device, an iPad, a smart TV, and the like.

As illustrated in FIG. 9, the device 900 may include one or a plurality of the following assemblies: a processing assembly 902, a memory 904, a power supply assembly 906, a multimedia assembly 908, an audio assembly 910, an input/output (I/O) interface 912, a sensor assembly 916, and a communication assembly 918.

The processing assembly 902 generally controls overall operation of the device 900, such as operations related to display, call, data random access, camera and record. The processing assembly 902 may include one or a plurality of processors 920 to execute instructions, so as to achieve all or a part of steps of the above-described method for random access. Additionally, the processing assembly 902 may include one or a plurality of modules, facilitating interaction between the processing assembly 902 and other assemblies. For example, the processing assembly 902 may include a multimedia module, thereby facilitating interaction between the multimedia assembly 908 and the processing assembly 902. For another example, the processing assembly 902 may read executable instructions from the memory to implement the steps of the method for random access provided in the above embodiments.

The memory 904 is configured to store various types of data to support the operations of the device 900. Examples of these data include instructions, contact data, telephone book data, messages, pictures, videos, etc. for any application or method operated on the device 900. The memory 904 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power supply assembly 906 provides power for various assemblies of the device 900. The power supply assembly 906 may include a power management system, one or a plurality of power sources, and other assemblies associated with generating, managing and distributing power for the device 900.

The multimedia assembly 908 includes a display screen providing one output interface between the device 900 and the user. In in some embodiments, the multimedia assembly 908 includes a front camera and/or a rear camera. When the device 900 is in an operation mode, such as in a photographing or video mode, the front camera and/or the rear camera can receive external multimedia data. Each of the front camera and the rear camera may be a fixed optical lens system or has a focal length and optical zoom capability.

The audio assembly 910 is configured to output and/or input an audio signal. For example, the audio assembly 910 includes a microphone (MIC). The microphone is configured to receive external audio signal when the device 900 is in the operation mode, such as in a call mode, a record mode and a speech recognition mode. The received audio signal can be further stored in the memory 904 or transmitted via the communication assembly 918. In some embodiments, the audio assembly 910 further includes a speaker configured to output the audio signal.

The input/output (I/O) interface 912 provides interfaces between the processing assembly 902 and peripheral interface modules, and the forgoing peripheral interface module may be a keyboard, a click wheel, a button, etc. The button may include but not limited to a homepage button, a volume button, a start button and a lock button.

The sensor assembly 916 includes one or a plurality of sensors configured to provide state assessments of various aspects of device 900. For example, the sensor assembly 916 may detect on/off state of the device 900, relative positioning of assemblies. For example, the assemblies may be a display and a keypad of the device 900. The sensor assembly 916 may further detect positional variation of the device 900 or one assembly of the device 900, presence or absence of contact between the user and the device 900, orientation or acceleration/deceleration of the device 900 and temperature variation of the device 900. The sensor assembly 916 may include a proximity sensor configured to detect presence of nearby objects without any physical contact. The sensor assembly 916 may also include an optical sensor, such as a COMS or CCD image sensor configured to use in an imaging application. In some embodiments, the sensor assembly 916 may further include an acceleration sensor, a gyro sensor, a magnetic sensor, a pressure sensor or a temperature sensor.

The communication assembly 918 is configured to facilitate wired or wireless communication between the device 900 and other devices. The device 900 may access to wireless network based on communication standard, such as Wi-Fi, 2G, 3G, 4G, 5G, or combination thereof. In an exemplary embodiment, the communication assembly 918 receives a broadcast signal or information related to the broadcast from an external broadcast management system. In an exemplary embodiment, the communication assembly 918 further includes a near-field communication (NFC) module to promote short range communication. For example, the NFC module may be realized based on a radio frequency identification (RFID) technology, an infra-red data association (IrDA) technology, an ultra-wide band (UWB) technology, a Bluetooth (BT) technology and other technologies.

In an illustrative embodiment, the device 900 may be realized by one or a plurality of application specific integrated circuits (ASIC), digital signal processors 69 (DSP), digital signal processing equipment (DSPD), programmable logic devices (PLD), field-programmable gate arrays (FPGA), controllers, microcontrollers, microprocessors 69 or other electronic elements configured to execute the method for random access on the terminal side in any embodiments described above.

In illustrative embodiments, there is also provided a non-transitory machine-readable storage medium including instructions, such as a memory 904 including instructions, and the instructions is executable by the processor 920 of the device 900 to accomplish the method for random access described above. For example, the non-transitory computer readable storage medium may be ROM, random access memory (RAM), CD-ROM, magnetic tape, floppy disks, and optical data storage devices, among others.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as exemplary only, with the true scope and spirit of the disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. A method for random access, performed by a terminal, comprising:
in response to having sent a physical random access channel (PRACH) to a base station and not receiving a random access message sent by the base station, determining to perform a physical random access channel (PRACH) retransmission;
determining a target repetition number for repeat sending of the PRACH when performing the PRACH retransmission; and
performing the PRACH retransmission based on the target repetition number.

2. The method according to claim 1, wherein determining the target repetition number for repeat sending of the PRACH when performing the PRACH retransmission comprises:
determining the target repetition number based on an initial repetition number, wherein the initial repetition number is a repetition number for repeat sending of the PRACH determined when the terminal sends the PRACH to the base station for a first time.

3. The method according to claim 2, further comprising:
obtaining a first measurement value by measuring a synchronization signal-reference signal receiving power (RSRP) before sending the PRACH to the base station for the first time;
determining a first RSRP threshold greater than the first measurement value and having a smallest difference from the first measurement value from one or more preset RSRP thresholds; and
based on preset repetition numbers corresponding to different RSRP thresholds, determining a preset repetition number corresponding to the first RSRP threshold as the initial repetition number.

4. The method according to claim 2, wherein determining the target repetition number for repeat sending of the PRACH when performing the PRACH retransmission comprises:
determining the target repetition number to be equal to the initial repetition number.

5. The method according to claim 2, wherein determining the target repetition number based on the initial repetition number comprises:
determining a first repetition number greater than the initial repetition number; and
determining the target repetition number to be equal to the first repetition number.

6. The method according to claim 2, wherein determining the target repetition number based on the initial repetition number comprises:
determining a second repetition number greater than the initial repetition number when not receiving a msg2 sent by the base station; and
determining the target repetition number to be equal to the second repetition number.

7. The method according to any one of claims 2 to 6, further comprising:
determining a sending power when performing the PRACH retransmission based on the target repetition number.

8. The method according to claim 7, wherein determining the sending power when performing the PRACH retransmission based on the target repetition number comprises:
in a case where the target repetition number is equal to the initial repetition number, determining to perform a power ramping when performing the PRACH retransmission; and
in a case where the target repetition number is greater than the initial repetition number, determining not to perform a power ramping when performing the PRACH retransmission.

9. The method according to any one of claims 2 to 6, further comprising:
determining a target resource used when performing the PRACH retransmission.

10. The method according to claim 9, wherein determining the target resource used when performing the PRACH retransmission comprises:
determining the target resource used when performing the PRACH retransmission to be a resource of a first resource group in a case where the target repetition number is equal to the initial repetition number, wherein the first resource group is a resource group of a plurality of resource groups pre-allocated to the terminal associated with the initial repetition number.

11. The method according to claim 9, further comprising:
determining a second resource group associated with the target repetition number from a plurality of resource groups pre-allocated to the terminal in a case where the target repetition number is greater than the initial repetition number; and
determining the target resource used when performing the PRACH retransmission comprises:
determining the target resource used when performing the PRACH retransmission to be a resource of the second resource group.

12. The method according to claim 1, further comprising:
obtaining a second measurement value by measuring a synchronization signal-RSRP;
determining a second RSRP threshold greater than the second measurement value and having a smallest difference from the second measurement value from one or more preset RSRP thresholds; and
determining the target repetition number for repeat sending of the PRACH when performing the PRACH retransmission comprises:
based on preset repetition numbers corresponding to different RSRP thresholds, determining a preset repetition number corresponding to the second RSRP threshold as target repetition number.

13. The method according to claim 12, further comprising:
determining a sending power when performing the PRACH retransmission based on the target repetition number.

14. The method according to claim 13, wherein determining the sending power when performing the PRACH retransmission based on the target repetition number comprises:
in a case where the RACH retransmission is performed based on the target repetition number, determining not to perform a power ramping when performing the PRACH retransmission; or
in response to determining that the target repetition number is different from a third repetition number of a previous repeat sending of the PRACH, determining not to perform a power ramping when performing the PRACH retransmission.

15. The method according to claim 12, further comprising:
determining a target resource used when performing the PRACH retransmission.

16. The method according to claim 15, further comprising:
determining a second resource group associated with the target repetition number from a plurality of resource groups pre-allocated to the terminal; and
determining the target resource used when performing the PRACH retransmission comprises:
determining the target resource used when performing the PRACH retransmission as a resource of the second resource group.

17. A device for random access, comprising:
a first determining module configured to, in response to having sent a physical random access channel (PRACH) to a base station and not receiving a random access message sent by the base station, determine to perform a physical random access channel (PRACH) retransmission;
a second determining module configured to determine a target repetition number for repeat sending of the PRACH when performing the PRACH retransmission; and
a transmission module configured to perform the PRACH retransmission based on the target repetition number.

18. A computer-readable storage medium storing a computer program configured to perform the method for random access according to any one of claims 1 to 16.

19. A device for random access, comprising:
a processor; and
a memory configured to store instructions executable by the processor,
wherein the processor is configured to perform the method for random access according to any one of claims 1 to 16.
